# FASCICULE DE BREVET EUROPEEN

(11) **EP 2 628 644 B1**
(45) Date de publication et mention de la délivrance du brevet: **26.11.2014**
(21) Numéro de dépôt: 13155536.9
(22) Date de dépôt: 15.02.2013
(51) Int. Cl.: B60R 13/08

(54) **Composant d'insonorisation, notamment pour un tablier d'habitacle de véhicule automobile**
Schalldämmkomponente, insbesondere für ein Trennblech des Innenraums eines Kraftfahrzeugs
Soundproofing component, in particular for a firewall of a motor-vehicle passenger compartment

(30) Priorité: 17.02.2012 FR 1251500
(43) Date de publication de la demande: 21.08.2013
(73) Titulaire: Faurecia Automotive Industrie, 92000 Nanterre (FR)
(72) Inventeur: Marcq, Philippe - Jean, 08210 MOUZON (FR)
(74) Mandataire: Domenego, Bertrand

(56) Documents cités:
- WO-A1-98/30418
- WO-A1-2004/008014

## Description

La présente invention concerne un composant d'insonorisation, notamment pour un tablier d'habitacle de véhicule automobile.

On rappelle qu'un tablier d'habitacle est une paroi séparant un compartiment moteur d'un habitacle du véhicule automobile. Le composant d'insonorisation est destiné à recouvrir un tel tablier d'habitacle, afin notamment d'atténuer les bruits en provenance du moteur.

On connaît déjà, dans l'état de la technique, un composant d'insonorisation pour un tablier d'habitacle de véhicule automobile, du type comportant une zone de passage pour une colonne de direction du véhicule automobile.

Afin d'assurer une fonction d'isolation acoustique vis-à-vis des bruits en provenance du compartiment moteur et d'atténuation des bruits dans l'habitacle, le composant d'insonorisation comporte généralement une première couche réalisée dans un matériau de type « masse lourde », associé à une seconde couche dite « couche de découplage », réalisée dans un matériau poreux et élastique, généralement un matériau à base de polyuréthane. Ce type de composant d'insonorisation bi-couches est généralement désigné par le terme « masse-ressort », car la seconde couche agit comme un ressort qui amortit les vibrations de la première couche.

On rappelle qu'une « masse lourde » est un matériau thermoplastique, de densité élevée, généralement comprise entre 1500 et 2000 kg/m³, et de masse surfacique généralement comprise entre 3 et 5 kg/m². Par exemple, une « masse lourde » peut être réalisée dans un matériau à base de polymère de type polyoléfine, d'un copolymère d'éthylène et d'acétate de vinyle, d'un polymère Ethylène Propylène Diène Monomère (EPDM) ou d'un mélange de ces composants. En plus de ce matériau, une masse lourde contient habituellement des charges, notamment de type craie ou sulfate de baryum.

Par ailleurs, la couche de découplage est généralement réalisée dans une mousse souple dont la masse volumique est de l'ordre de 50 kg/m³.

En plus des première et seconde couches précitées d'un composant de type « masse-ressort », il est possible d'ajouter des couches supplémentaires assurant une fonction d'absorption acoustique, telles des couches de mousse ou de feutre. Par exemple, EP 1 474 798 décrit un composant d'insonorisation appelé LWC (acronyme anglais pour « Light Weight Concept »), réalisé par une association particulière de couches. Un tel composant d'insonorisation est très efficace à la fois en isolation et en absorption, tout en présentant un poids relativement faible. En particulier, un tel composant d'insonorisation est réalisé avec des masses lourdes de moindre poids, de masse surfacique de l'ordre de 2 kg/m².

La zone de passage de la colonne de direction présente généralement une forme de cavité, destinée à s'adapter à la forme du tablier. Un orifice de passage pour la colonne de direction est ménagé au fond de cette cavité.

La cavité est généralement obtenue par thermoformage de la masse lourde, ce thermoformage entraînant un étirement de la masse lourde, et notamment un amincissement de cette masse lourde sur toute sa surface, et plus particulièrement à la périphérie de la cavité. En d'autres termes, la zone de passage est fragilisée, notamment à proximité de la périphérie de la cavité, si bien qu'il existe des risques de déchirement de la masse lourde au moment du formage, ainsi que durant son utilisation.

Par ailleurs, la couche de mousse étant générée à partir de constituants liquides introduits dans un moule où est préalablement disposée la masse lourde, cette mousse risque de traverser la masse lourde en cas de déchirure de cette masse lourde. Un composant d'insonorisation dont la masse lourde est déchirée et dont la mousse a traversé la masse lourde n'est pas utilisable, et doit donc être mis au rebus. En outre, une traversée de la mousse entraîne la nécessité d'un nettoyage complet du moule.

Enfin, il apparaît que les performances acoustiques de la masse lourde sont considérablement réduites, en particulier en terme d'isolation, lorsque cette masse lourde se trouve ainsi étirée et amincie sur toute la surface de la cavité. Ce problème se trouve exacerbé dans le cas où le composant d'insonorisation est du type LWC, car la masse lourde présente une masse surfacique moindre.

Ainsi, du fait de l'amincissement de la masse lourde, la zone de passage se trouve à l'origine de fuites acoustiques, qui détériorent considérablement le confort acoustique au sein de l'habitacle.

Il est possible de pallier ce problème en déposant localement une surépaisseur de masse lourde, tel que cela est décrit par exemple dans US 5 922 265 ou US 2004/0150128. Toutefois, ces procédés sont complexes à mettre en oeuvre, et nécessitent des investissements conséquents.

Par ailleurs, les constructeurs automobiles font évoluer les composants d'insonorisation de tablier pour améliorer leur ergonomie et pour permettre de plus grandes amplitudes de réglage de la colonne de direction. A cet effet, la zone de passage de colonne de direction présente généralement de faibles dépouilles, voire parfois des contre-dépouilles, ce qui rend le formage du composant d'insonorisation très difficile à mettre en oeuvre. En particulier, le formage de la zone de passage, lorsqu'elle présente des contre-dépouilles, est réalisé selon un axe de formage différent d'un axe de formage principal selon lequel le reste du composant d'insonorisation est réalisé.

Pour remédier à cet inconvénient, il est connu d'intégrer, à l'intérieur même du moule, des parties amovibles qui travaillent selon un axe différent de l'axe principal de formage au cours de la réalisation du composant d'insonorisation. Toutefois, l'intégration de ces parties amovibles est généralement complexe, ou nécessite un équipement de formage adapté et particulièrement onéreux. De plus, le travail de la masse lourde selon deux axes différents a généralement pour effet de la fragiliser d'avantage, et accentue donc le problème de déchirement préalablement évoqué.

Un composant d'insonorisation qui correspond à celui du préambule de la revendication 1 est par ailleurs décrit dans WO 98/30418.

L'invention a notamment pour but de remédier aux inconvénients précités, en fournissant un composant d'insonorisation particulièrement résistant, limitant les fuites acoustiques, et simple à fabriquer.

A cet effet, l'invention a notamment pour objet un composant d'insonorisation selon la revendication 1.

La seconde partie, également appelée « bonnette », est distincte de la première, si bien qu'il est possible de les réaliser dans des matériaux différents. En effet, cette seconde partie sera habituellement une partie comportant une zone de passage d'organe, et/ou présentant une zone à déformation importante et/ou présentant des contre-dépouilles par rapport à l'axe de formage principal de la première partie. L'invention a donc pour avantage de permettre la réalisation de cette seconde partie dans un matériau plus résistant que celui utilisé pour la fabrication de la première partie.

En outre, les première et seconde parties étant réalisées indépendamment l'une de l'autre, il n'est pas nécessaire de changer d'axe de formage au cours de la réalisation du composant d'insonorisation. En effet, chaque partie est formée séparément, avec un axe de formage propre.

Les moyens de fixation à formes d'emboîtement complémentaires permettent de fixer les première et seconde parties entre elles en formant un « joint acoustique », limitant les risques de fuites acoustiques entre ces première et seconde parties.

Un composant d'insonorisation selon l'invention peut comporter en outre l'une ou plusieurs des caractéristiques suivantes, prises seules ou selon toutes les combinaisons techniquement possibles.
- au moins un créneau, et respectivement au moins une dent complémentaire, présente une dimension circonférentielle différente de celle d'au moins un autre créneau, respectivement d'au moins une autre dent ;
- chaque créneau, et chaque dent, présente au moins un dénivelé d'épaisseur ;
- chaque créneau présente une zone intérieure de faible épaisseur, et une première zone intermédiaire dont l'épaisseur est comprise entre celle de la zone intérieure et celle du reste de la première partie, et chaque dent présente une zone extérieure de faible épaisseur, et une seconde zone intermédiaire dont l'épaisseur est comprise entre celle de la zone extérieure et celle du reste de la seconde partie, et la seconde zone intermédiaire coopère avec la zone intérieure, et la zone extérieure coopère avec la première zone intermédiaire ;
- la première partie comporte au moins une première couche formée dans un premier matériau, et la seconde partie comporte au moins une première couche formée dans un second matériau, le second matériau étant différent de chaque matériau de la première partie, et présentant par exemple une masse volumique supérieure à celle de chaque matériau de la première partie ;
- la première partie comporte une première couche formée dans un premier matériau de type masse lourde, et une seconde couche formée dans une première mousse isolante, recouvrant la première couche, et la seconde partie comporte une première couche formée dans un second matériau de type masse lourde, et une seconde couche formée dans une seconde mousse isolante, recouvrant la première couche, et le second matériau de type masse lourde présentant une masse volumique supérieure à celle du premier matériau de type masse lourde ;
- le composant d'insonorisation est destiné à recouvrir un tablier de véhicule automobile, la seconde partie comprenant une zone de passage pour une colonne de direction du véhicule automobile.

L'invention sera mieux comprise à la lecture de la description qui va suivre, donnée uniquement à titre d'exemple et faite en se référant aux figures annexées parmi lesquelles :
- la figure 1 est une section longitudinale partielle d'un composant d'insonorisation selon un exemple de mode de réalisation de l'invention ;
- la figure 2 est une vue partielle en perspective d'une première partie du composant d'insonorisation de la figure 1 ;
- la figure 3 est une vue en perspective d'une seconde partie du composant d'insonorisation de la figure 1 ;
- la figure 4 est une vue en perspective de la seconde partie de la figure 3, assemblée avec la première partie de la figure 2 ;
- la figure 5 est une vue en coupe tridimensionnelle de l'assemblage de la figure 4;
- la figure 6 est un détail d'une section longitudinale d'un composant d'insonorisation selon une première variante de réalisation ;
- la figure 7 est une section transversale d'un détail des moyens de fixation de la première partie sur la seconde partie d'un composant d'insonorisation selon une deuxième variante de réalisation.

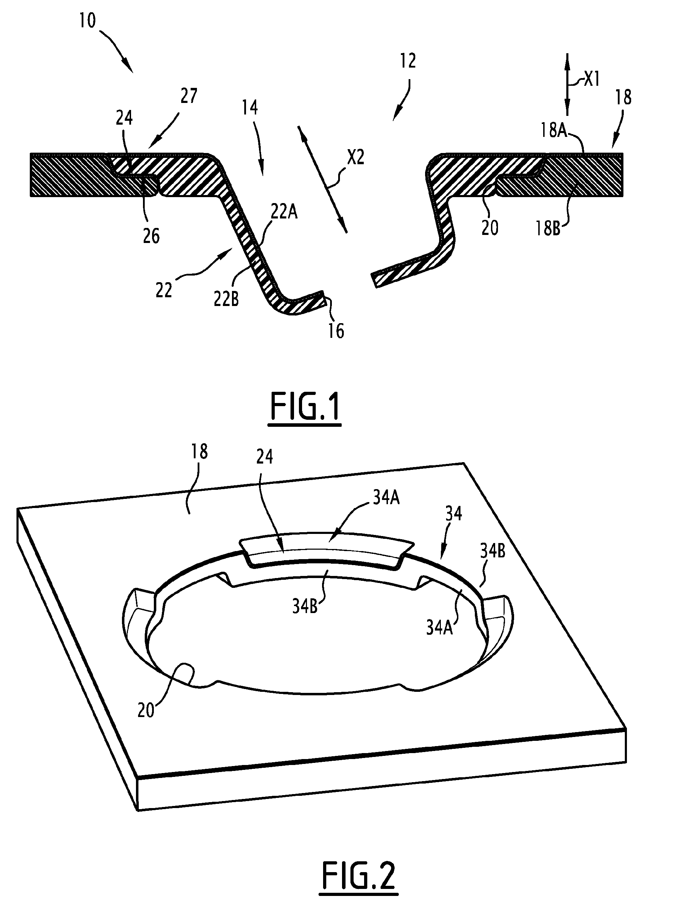

On a représenté, sur la figure 1, un composant d'insonorisation 10, destiné à recouvrir un tablier d'habitacle de véhicule automobile, afin notamment d'atténuer les bruits en provenance du moteur.

De manière classique, le véhicule automobile comporte une colonne de direction, passant à travers le tablier depuis l'habitacle jusqu'à une chaîne de commande de direction. Puisque le composant d'insonorisation 10 recouvre le tablier, la colonne de direction passe également à travers ce composant d'insonorisation 10, dans une zone de passage 12 prévue à cet effet.

Afin d'épouser la forme du tablier à proximité de la colonne de direction, la zone de passage 12 forme une cavité 14, munie en son fond d'un orifice 16 de passage pour la colonne de direction.

Afin notamment de faciliter le formage de cette cavité 14, en particulier lorsqu'elle présente des contre-dépouilles, le composant d'insonorisation 10 comporte deux parties distinctes, dont une première partie 18, présentant une ouverture 20, et une seconde partie 22, comprenant la zone de passage 12. La seconde partie 22 est rapportée sur la première partie 18, dans l'ouverture 20, dont les dimensions sont adaptées pour recevoir cette seconde partie 22.

Ainsi, les première 18 et seconde 22 parties peuvent être formées séparément, puis assemblées pour former le composant d'insonorisation 10. A titre informatif, on a représenté sur la figure 1 un premier axe fictif X1, correspondant à l'axe principal de formage de la première partie 18, et un second axe fictif X2, correspondant à l'axe de formage de la seconde partie 22.

Les axes X1 et X2 n'étant pas parallèles, il apparaît clairement que la réalisation des première 18 et seconde 22 parties séparément est bien plus simple que la réalisation d'un composant d'insonorisation réalisé d'un seul tenant, dont la cavité présenterait une contre-dépouille.

La première partie 18 est formée, dans son épaisseur, par une première couche 18A d'un premier matériau, de préférence de type masse lourde (dit « première masse lourde »), et une seconde couche 18B d'une première mousse isolante recouvrant la première couche. Habituellement, la première couche 18A est tournée vers l'habitacle, et la seconde couche 18B est tournée vers le tablier du véhicule automobile.

De même, la seconde partie 22 est formée, dans son épaisseur, par une première couche 22A d'un second matériau de type masse lourde (dit « seconde masse lourde »), et une seconde couche 22B d'une seconde mousse isolante recouvrant la première couche.

Les première et seconde masses lourdes et les première et seconde mousses sont par exemple de type classiquement utilisées dans les composants d'insonorisation pour tablier de véhicule automobile.

De préférence, le second matériau est différent de chaque matériau de la première partie 18. Par exemple, ce second matériau présente une masse volumique supérieure à celle de chaque matériau de la première partie 18.

En particulier, conformément au mode de réalisation décrit, la première masse lourde, formant la première couche 18A de la première partie 18, est différente de la seconde masse lourde, formant la première couche 22A de la seconde partie 22.

Par exemple, la seconde masse lourde présente une masse volumique supérieure à celle de la première masse lourde. En effet, la seconde partie 22 est particulièrement déformée lors de son formage pour la réalisation de la cavité 14. Il est donc préférable de réaliser cette seconde partie 22 dans un matériau particulièrement résistant. En outre, puisque la seconde masse lourde est amincie lors de son formage, il est préférable de réaliser cette seconde partie 22 dans un matériau de masse surfacique suffisamment élevée pour conserver de bonne performances acoustiques malgré cet amincissement. En revanche, la première partie 18 étant moins déformée, elle ne nécessite pas d'être réalisée dans un matériau aussi résistant et de masse surfacique aussi élevée que celui de la seconde partie 22.

En variante, la seconde partie 22 pourrait être réalisée dans une autre matière, telle qu'un feutre ou une mousse lourde (c'est-à-dire une mousse dont la masse volumique est de l'ordre de 100kg/m³). Dans ce cas, la seconde partie 22 pourrait ne comporter qu'une seule couche de matériau, ce matériau restant de préférence différent de chacun des matériaux formant les couches de la première partie 18.

Comme cela est notamment représenté sur la figure 2, la première partie 18 comporte, en périphérie de l'ouverture 20, une zone périphérique 24 d'accueil pour la seconde partie 22.

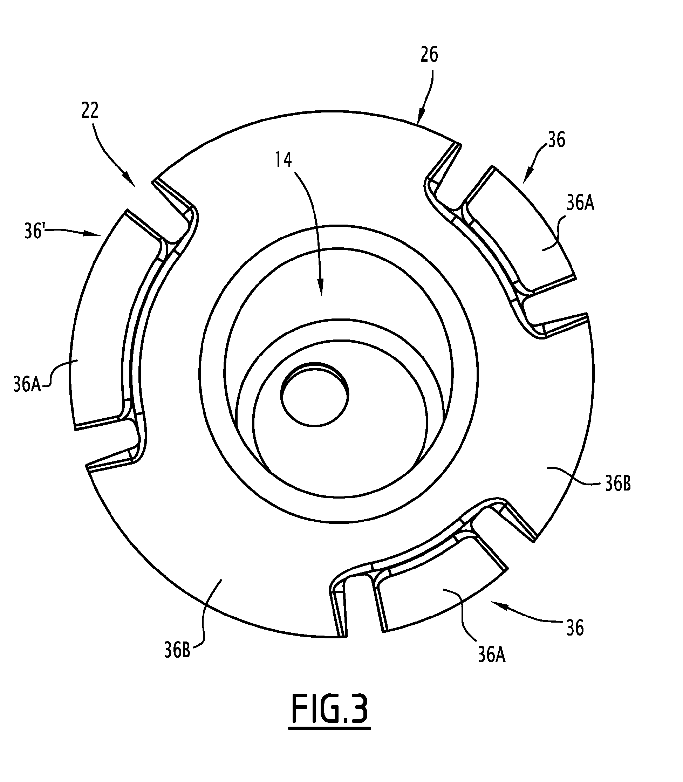

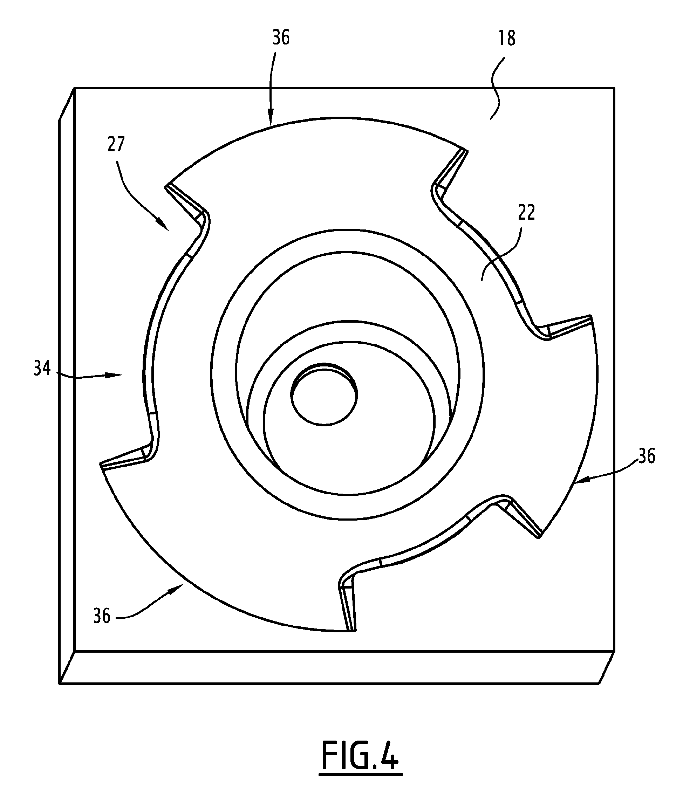

Par ailleurs, comme cela est notamment représenté sur la figure 3, la seconde partie 22 est délimitée par une zone circonférentielle 26, entourant notamment la cavité 14. Ladite zone circonférentielle 26 est complémentaire de la zone périphérique d'accueil 24 de la première partie 18, et elle est destinée à être agencée en contact de cette zone périphérique d'accueil 24, comme cela est représenté sur les figures 1 et 4.

De préférence, la zone périphérique 24 présente une épaisseur inférieure à celle de la première partie 18 en dehors de cette zone périphérique 24, de sorte que la somme des épaisseurs de la zone périphérique 24 et de la zone circonférentielle 26 soit sensiblement identique à l'épaisseur de la première partie 18 en dehors de la zone périphérique 24. En pratique, les épaisseurs de ces zones périphérique 24 et circonférentielle 26, avant assemblage, sont chacune légèrement supérieures à la moitié de l'épaisseur de la partie 18 de façon à créer une pression lors de l'assemblage entre ces zones. En particulier lorsque les parties 18, 22 sont réalisées en bicouches masse lourde / mousse, ce surplus d'épaisseur sera dû uniquement à la mousse, qui est un matériau compressible. Ainsi après assemblage, la mousse étant comprimée, la somme des épaisseurs des zones zones périphérique 24 et circonférentielle 26 correspondra sensiblement à l'épaisseur de la zone 18.

La seconde partie 22 est fixée sur la première partie 18 par des moyens de fixation 27, comprenant des premières et secondes formes d'emboîtement complémentaires, ménagées respectivement sur les première 18 et seconde 22 parties, et permettant l'emboîtement de la seconde partie 22 sur la première partie 18, dans l'ouverture 20.

En particulier, comme cela est représenté sur la figure 2, la zone périphérique 24 de la première partie 18 présente une forme crénelée, présentant des créneaux 34 formant les premières formes d'emboîtement. Chaque créneau 34 forme, sur une face, un creux 34A et, sur l'autre face, une bosse 34B. Ainsi, sur une même face de la première partie 18, les créneaux 34 forment une alternance de creux 34A et de bosse 34B.

Comme cela est représenté sur la figure 3, la seconde partie 22 est munie, dans sa zone circonférentielle 26, de dents 36 formant les secondes formes d'emboîtement. Chaque dent 36 est destinée à être insérées dans un creux 34A formé par un créneau 34 correspondant, et présente donc une forme complémentaire du creux 34A correspondant, notamment une dimension circonférentielle sensiblement identique à celle du creux 34A correspondant.

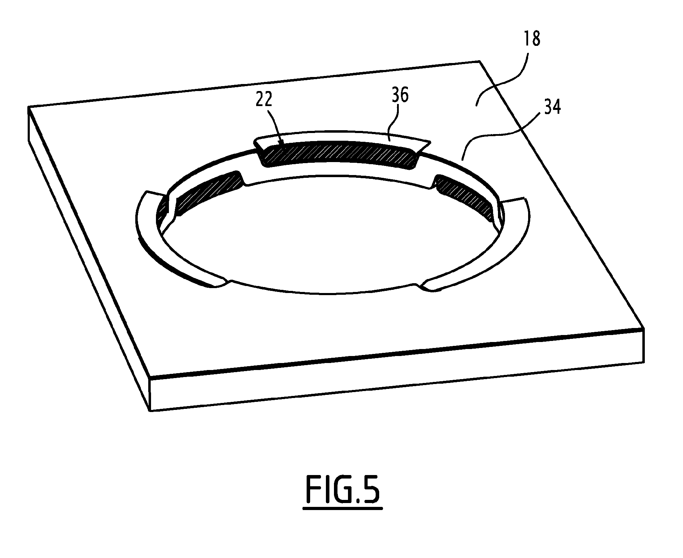

Comme cela est notamment représenté sur la figure 5, ce principe d'emboîtement permet de générer une pression de la seconde partie 22 sur la première partie 18, et ainsi réaliser une fonction de joint.

Par ailleurs, on notera que deux dents 36A, 36B successives circonférentiellement sont décalées axialement de façon à reposer sur une face respective de la première partie 18.

De préférence, au moins un créneau 34, et respectivement au moins une dent 36 complémentaire, présente une dimension circonférentielle différente de celle d'au moins un autre créneau, respectivement d'au moins une autre dent. On réalise ainsi une fonction de détrompeur, la position de la seconde partie 22 vis-à-vis de la première partie 18 étant imposée par la forme de ce créneau 34, qui ne coïncide qu'avec la dent 36 de dimension circonférentielle complémentaire.

Avantageusement, un seul créneau, et respectivement une seule dent complémentaire, présente une dimension circonférentielle différente de celle de tous les autres créneaux, respectivement de toutes les autres dents. Par exemple, on a représenté sur la figure 4 une dent 36' dont la dimension circonférentielle est inférieure à celle des autres dents 36 destinées à coopérer avec la même face de la première partie 18.

Ce principe d'emboîtement par créneaux assure un auto-centrage de bonne précision de la seconde partie 22 dans l'ouverture 20 de la première partie 18.

On notera que la seconde partie 22 est de préférence réalisée dans des matériaux flexibles, afin de faciliter l'insertion de chaque dent 36 dans le creux 34A correspondant. Cela est le cas des matériaux communément utilisé dans le contexte de l'insonorisation telles les masses lourdes ou les feutres.

Il apparaît que les moyens de fixation 27 sont particulièrement simples et efficaces, puisqu'ils assurent en outre la fonction supplémentaire de « joint acoustique », grâce aux recouvrements des zones périphériques et circonférentielle d'une part, et à la compression de la mousse d'autre part.

Par ailleurs, ces moyens de fixation 27 ne nécessitent pas d'ajout de pièces de fixation supplémentaires, telles que des rivets ou des doubles pions sapin. En effet, de telles pièces de fixation supplémentaires risqueraient de générer des fuites acoustiques par transmission solidienne.

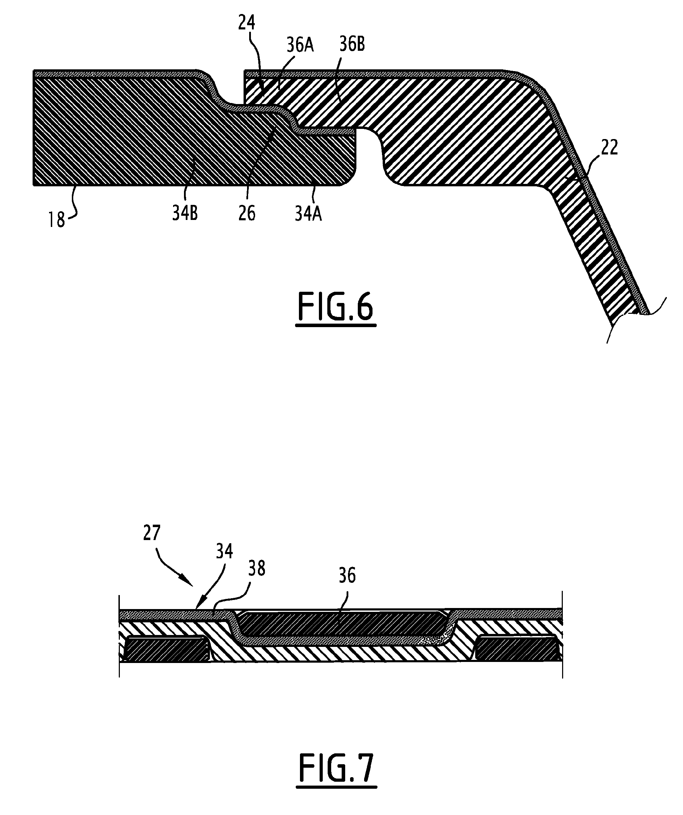

Conformément à une première variante, représentée sur la figure 6, chaque créneau 34, et chaque dent 36, présente au moins un dénivelé d'épaisseur.

Dans l'exemple représenté, chaque créneau 34 présente une zone intérieure 34A de faible épaisseur, et une première zone intermédiaire 34B dont l'épaisseur est comprise entre celle de la zone intérieure 34A et celle du reste de la première partie 18. De même, chaque dent 36 présente une zone extérieure 36A de faible épaisseur, et une seconde zone intermédiaire 36B dont l'épaisseur est comprise entre celle de la zone extérieure 36A et celle du reste de la seconde partie 22.

Ainsi, la seconde zone intermédiaire 36B coopère avec la zone intérieure 34A, et la zone extérieure 36A coopère avec la première zone intermédiaire 34B. De préférence, la somme des épaisseurs de la zone intérieure 34A et de la seconde zone intermédiaire 36B est sensiblement égale à la somme des épaisseurs de la zone extérieure 36A et de la première zone intermédiaire 34B, en tenant compte de la compressibilité de la mousse comme cela a été décrit précédemment.

Ce principe de jonctions par créneaux, en permettant un effet « chicane », minimise fortement les fuites acoustiques. En effet dans une direction orthogonale au plan du composant d'insonorisation 10, la transmission des ondes sonores est bloquée par un principe de découplage bien connu, généralement appelé « principe masse-ressort ».

De ce fait, au niveau de la jonction crée entre la première 18 et la seconde 22 parties, les ondes sonores sont essentiellement véhiculées par la couche d'air présente entre les créneaux 34 et les dents complémentaires 36.

Or, présence des chicanes allonge significativement le parcours de l'onde sonore, et favorise ainsi son atténuation. D'autre part, ce double niveau de « marches » sécurise la fonction de joint de la mousse (évoquée plus haut) en créant une zone de compression supplémentaire au niveau de la « contre marche » de la seconde chicane qui joue dans une direction orthogonale par rapport aux autre zones de compression.

Conformément à une autre variante représentée sur la figure 7, particulièrement dans le cas où les matériaux des parties 18 et 22 sont différents et exempts de mousse, cet effet chicane (ou double chicanes) est renforcé en recouvrant les dents 36 d'un matériau souple 38, de type EPDM (éthylène-propylène-diène monomère), formant un joint de type « joint couronne » particulièrement efficace en isolation.

Ce joint couronne, qui recouvre la seconde partie 22 en reposant sur les dents 36, présentant une épaisseur généralement comprise entre 3 mm et 6 mm, est déformé au moment de l'assemblage avec la première partie 18 pour épouser les créneaux successifs 34, et permet ainsi de combler des jeux de montage entre les dents 36 et les créneaux 34. Ce type de matériau est très compressible, si bien que son épaisseur est réduite à quelques dixièmes de millimètres après assemblage.

On notera que l'invention n'est pas limitée aux modes de réalisation précédemment décrits, mais pourrait présenter diverses variantes sans sortir du cadre des revendications.

En particulier, l'invention pourrait s'appliquer à des première et seconde parties formées par des matériaux différents de ceux qui ont été décrits précédemment, par exemple ne comportant pas de masse lourde.

On pourrait également prévoir une seconde partie 22 réalisée selon le principe du LWC décrit dans EP 1 474 798, basé sur la superposition de trois ou quatre couches à fonction acoustiques. On pourrait toutefois conserver une première partie 18 réalisée selon le principe masse-ressort avec seulement deux couches principales.

D'autres principes acoustiques n'impliquant pas la présence de masses lourdes pourraient être utilisés pour la réalisation de la première et/ou de la seconde partie. En particulier, on pourrait utiliser les principes décrits dans WO 2010/094897, qui décrit un composant comprenant essentiellement trois couches de feutre, ou WO 2009/016321, qui décrit un composant comprenant une association feutre et mousse polyuréthane (PU).

On notera que l'invention n'est pas limitée à un composant d'insonorisation pour un tablier, mais pourrait également s'appliquer pour tout composant d'insonorisation comprenant une zone de passage d'organe, et/ou à tout composant d'insonorisation présentant une zone à déformation importante et/ou confronté au problème des contre-dépouilles. On citera pour exemple des composants d'insonorisation autorisant le passage de faisceaux de câbles, de pédaliers, de levier de vitesse, etc.

## Revendications

1. Composant d'insonorisation (10), notamment de véhicule automobile, comportant :
- une première partie (18), présentant une ouverture (20),
- une seconde partie (22), rapportée sur la première partie (18) dans l'ouverture (20), et
- des moyens (27) de fixation de la seconde partie (22) sur la première partie (18), comprenant des premières (34) et secondes (36) formes d'emboîtement complémentaires, ménagées respectivement sur les première (18) et seconde (22) parties, permettant l'emboîtement de la seconde partie (22) avec la première partie (18), dans l'ouverture (20),
et dans lequel :
- la première partie (18) comporte, en périphérie de l'ouverture (20), une zone périphérique (24) d'accueil pour la seconde partie (22), et
- la seconde partie (22) est délimitée par une zone circonférentielle (26), ladite zone circonférentielle (26) étant complémentaire de la zone périphérique (24) de la première partie (18), et destinée à être agencée en contact de cette zone périphérique (24)
**caractérisé en ce que** :
- la zone périphérique (24) de la première partie (18) présente une forme crénelée, présentant des créneaux (34) formant les premières formes d'emboîtement, chaque créneau (24) formant, sur une face, un creux (34A) et, sur l'autre face, une bosse (34B),
- la seconde partie (22) est munie, dans sa zone circonférentielle (26), de dents (36) formant les secondes formes d'emboîtement, chaque dent (36) étant destinée à être insérées dans un creux (34A) formé par un créneau (34) correspondant.

2. Composant d'insonorisation selon la revendication 1, dans lequel au moins un créneau (34), et respectivement au moins une dent (36) complémentaire, présente une dimension circonférentielle différente de celle d'au moins un autre créneau, respectivement d'au moins une autre dent.

3. Composant d'insonorisation selon la revendication 1 ou 2, dans lequel chaque créneau (34), et chaque dent (36), présente au moins un dénivelé d'épaisseur.

4. Composant d'insonorisation selon la revendication 3, dans lequel :
- chaque créneau (34) présente une zone intérieure (34A) de faible épaisseur, et une première zone intermédiaire (34B) dont l'épaisseur est comprise entre celle de la zone intérieure (34A) et celle du reste de la première partie (18),
- chaque dent (36) présente une zone extérieure (36A) de faible épaisseur, et une seconde zone intermédiaire (36B) dont l'épaisseur est comprise entre celle de la zone extérieure (36A) et celle du reste de la seconde partie (22), et
- la seconde zone intermédiaire (36B) coopère avec la zone intérieure (34A), et la zone extérieure (36A) coopère avec la première zone intermédiaire (34B).

5. Composant d'insonorisation (10) l'une quelconque des revendications précédentes, dans lequel la première partie (18) comporte au moins une première couche (18A) formée dans un premier matériau, et la seconde partie (22) comporte au moins une première couche (22A) formée dans un second matériau, le second matériau étant différent de chaque matériau de la première partie (18), et présentant par exemple une masse volumique supérieure à celle de chaque matériau de la première partie (18).

6. Composant d'insonorisation (10) selon la revendication 5, dans lequel :
- la première partie (18) comporte une première couche (18A) formée dans un premier matériau de type masse lourde, et une seconde couche (18B) formée dans une première mousse isolante, recouvrant la première couche (18A),
- la seconde partie (22) comporte une première couche (22A) formée dans un second matériau de type masse lourde, et une seconde couche (22B) formée dans une seconde mousse isolante, recouvrant la première couche (22A),
- le second matériau de type masse lourde présentant une masse volumique supérieure à celle du premier matériau de type masse lourde.

7. Composant d'insonorisation (10) selon l'une quelconque des revendications précédentes, du type destiné à recouvrir un tablier de véhicule automobile, dans lequel la seconde partie (22) comprend une zone de passage (12) pour une colonne de direction du véhicule automobile.

## Patentansprüche

1. Schalldämpfungs-Bauteil (10), insbesondere für ein Kraftfahrzeug, aufweisend:
- einen ersten Teil (18), der eine Öffnung (20) hat,
- einen zweiten Teil (22), der auf das erste Teil (18) in die Öffnung (20) aufgesteckt ist, und
- Mittel (27) zur Fixierung des zweiten Teils (22) an dem ersten Teil (18), welche aufweisen erste (34) und zweite (36) komplementäre Falzformen, die jeweilig an dem ersten (18) und dem zweiten (22) Teil bereitgestellt sind und die die Verfalzung des zweiten Teils (22) mit dem ersten Teil (18) in der Öffnung (20) erlauben,
und wobei:
- der erste Teil (18) in der Peripherie der Öffnung (20) einen peripheren Bereich (24) zur Aufnahme des zweiten Teils (22) aufweist und
- der zweite Teil (22) von einem Umfangsbereich (26) begrenzt ist, wobei der Umfangsbereich (26) zu dem peripheren Bereich (24) des ersten Teils (18) komplementär ist und dazu bestimmt ist, in Kontakt mit dem peripheren Bereich (24) zusammengesetzt zu sein,
**dadurch gekennzeichnet, dass**:
- die periphere Zone (24) des ersten Teils (18) eine gezackte Form hat mit Zacken (34), die die ersten Falzformen bilden, wobei jeder Zacken (34) auf einer Seite eine Aussparung (34A) und auf der anderen Seite einen Vorsprung (34B) bildet,
- der zweite Teil (22) in seinem Umfangsbereich (26) mit Zähnen (36) versehen ist, die die zweiten Falzformen bilden, wobei jeder Zahn (36) dazu bestimmt ist, in eine Aussparung (34A) eingesetzt zu werden, die von einem korrespondierenden Zacken (34) gebildet ist.

2. Schalldämpfungs-Bauteil gemäß Anspruch 1, wobei wenigstens ein Zacken (34), und respektive wenigstens ein komplementärer Zahn (36), eine Umfangsabmessung hat, die von jener wenigstens eines anderen Zacken, respektive wenigstens eines anderen Zahns, verschieden ist.

3. Schalldämpfungs-Bauteil gemäß Anspruch 1 oder 2, wobei jeder Zacken (34), und jeder Zahn (36), wenigstens einen Dicken-Sprung hat.

4. Schalldämpfungs-Bauteil gemäß Anspruch 3, wobei:
- jeder Zacken (34) einen inneren Bereich (34A) geringer Dicke und einen ersten zwischenliegenden Bereich (34B) hat, dessen Dicke zwischen jener des inneren Bereichs (34A) und jener des Rests des ersten Teils (18) liegt,
- jeder Zahn (36) einen äußeren Bereich (36A) geringer Dicke und einen zweiten zwischenliegenden Bereich (36B) hat, dessen Dicke zwischen jener des äußeren Bereichs (36A) und jener des Rests des zweiten Teils (22) liegt, und
- der zweite zwischenliegende Bereich (36B) mit dem inneren Bereich (34A) zusammenwirkt und der äußere Bereich (36A) mit dem ersten zwischenliegenden Bereich (34B) zusammenwirkt.

5. Schalldämpfungs-Bauteil (10) gemäß irgendeinem der vorhergehenden Ansprüche, wobei der erste Teil (18) wenigstens eine erste Schicht (18A) aufweist, die aus einem ersten Material gebildet ist, und der zweite Teil (22) wenigstens eine erste Schicht (22A) aufweist, die aus einem zweiten Material gebildet ist, wobei das zweite Material von jedem Material der erstes Teils (18) verschieden ist und z.B. eine Dichte hat, die größer als jene von jedem Material des ersten Teils (18) ist.

6. Schalldämpfungs-Bauteil (10) gemäß Anspruch 5, wobei:
- der erste Teil (18) eine erste Schicht (18A), die aus einem ersten Material des Typs großer Masse gebildet ist, und eine zweite Schicht (22B) aufweist, die aus einem ersten Isolierschaum gebildet ist und die die erste Schicht (18A) abdeckt,
- der zweite Teil (22) eine erste Schicht (22A), die aus einem zweiten Material des Typs großer Masse gebildet ist, und eine zweite Schicht (22B) aufweist, die aus einem zweiten Isolierschaum gebildet ist und die die erste Schicht (22A) abdeckt,
- das zweite Material des Typs großer Masse eine Dichte hat, die größer ist als jene des ersten Materials des Typs großer Masse.

7. Schalldämpfungs-Bauteil (10) gemäß irgendeinem der vorhergehenden Ansprüche, des Typs der vorgesehen ist, um eine Schürze des Kraftfahrzeugs abzudecken, wobei der zweite Teil (22) einen Durchgangsbereich (12) für eine Lenksäule des Kraftfahrzeugs aufweist.

## Claims

1. Sound-proofing component (10), especially for a motor vehicle, comprising:
- a first part (18) having an aperture (20);
- a second part (22) which is added onto the first part (18) within the aperture (20); and
- means (27) for fixing the second part (22) on the first part (18), said means comprising first (34) and second (36) interlocking shapes which are provided on the first (18) and second (22) parts respectively, and which permit the interlocking of the second part (22) with the first part (18) within the aperture (20),
and wherein:
- the first part (18) comprises, at the periphery of the aperture (20), a peripheral receiving zone (24) for the second part (22); and
- the second part (22) is delimited by a circumferential zone (26), the said circumferential zone (26) being complementary with the peripheral zone (24) of the first part (18) and being intended to be arranged in contact with the said peripheral zone (24),
**characterised in that**:
- the peripheral zone (24) of the first part (18) has a crenellated shape having crenellations (34) which form the first interlocking shapes, each crenellation (34) forming a cavity (34A) on one face and a boss (34B) on the other face; and
- the second part (22) is provided, in its circumferential zone (26), with teeth (36) which form the second interlocking shapes, each tooth (36) being intended to be inserted in a cavity (34A) formed by a corresponding crenellation (34).

2. Sound-proofing component according to Claim 1, wherein at least one crenellation (34), and at least one complementary tooth (36) respectively, has a circumferential dimension which is different from that of at least one other crenellation, respectively, of least one other tooth.

3. Sound-proofing component according to Claim 1 or 2, wherein each crenellation (34), and each tooth (36), has at least one difference in height within its thickness.

4. Sound-proofing component according to Claim 3, wherein:
- each crenellation (34) has an internal zone (34A) of low thickness, and a first intermediate zone (34B), the thickness of which is between that of the internal zone (34A) and that of the rest of the first part (18);
- each tooth (36) has an external zone (36A) of low thickness, and a second intermediate zone (36B), the thickness of which is between that of the external zone (36A) and that of the rest of the second part (22); and
- the second intermediate zone (36B) cooperates with the internal zone (34A), and the external zone (36A) cooperates with the first intermediate zone (34B).

5. Sound-proofing component (10) according to any of the preceding claims, wherein the first part (18) comprises at least one first layer (18A) which is formed from a first material, and the second part (22) comprises at least one first layer (22A) which is formed from a second material, said second material being different from each material of the first part (18) and having, for example, a density which is greater than that of each material of the first part (18).

6. Sound-proofing component (10) according to Claim 5, wherein:
- the first part (18) comprises a first layer (18A) which is formed from a first material of the heavy mass type, and a second layer (18B) which is formed from a first insulating foam which lines the first layer (18A); and
- the second part (22) comprises a first layer (22A) which is formed from a second material of the heavy mass type, and a second layer (22B) which is formed from a second insulating foam which covers the first layer (22A);
- the second material of the heavy mass type having a density which is greater than that of the first material of the heavy mass type.

7. Sound-proofing component (10) according to any of the preceding claims, of the type which is intended to line a bulkhead of a motor vehicle, wherein the second part (22) comprises a pass-through zone (12) for a steering column of the motor vehicle.
